# EUROPEAN PATENT APPLICATION

(11) **EP 4 734 355 A1**
(43) Date of publication of application: **29.04.2026**
(21) Application number: 24830603.7
(22) Date of filing: 20.06.2024
(51) Int. Cl.: H02P 21/14

(54) **VEHICLE CONTROL METHOD AND VEHICLE**

(30) Priority: 27.06.2023 CN 202310769721
(71) Applicant: Aurobay (Ningbo) Intelligent Technology Co., Ltd., Ningbo, Zhejiang 315336 (CN); Aurobay Technology Co., Ltd, Ningbo, Zhejiang 315800 (CN)
(72) Inventor: JING, Junchao, Hangzhou, Zhejiang 310051 (CN); LIU, Yiqiang, Hangzhou, Zhejiang 310051 (CN); LIU, Xiaogen, Hangzhou, Zhejiang 310051 (CN); HUANG, Weishan, Hangzhou, Zhejiang 310051 (CN); DAI, Zhengxing, Hangzhou, Zhejiang 310051 (CN); ZUO, Botao, Hangzhou, Zhejiang 310051 (CN); YANG, Guikang, Hangzhou, Zhejiang 310051 (CN)
(74) Representative: Michalski Hüttermann & Partner Patentanwälte mbB
(86) International application number: PCT/CN2024/100351
(87) International publication number: WO 2025/001957

(57) **Abstract**

Provided in the present invention are a vehicle control method and a vehicle. The vehicle control method includes: receiving a request to enable a pulse heating function; when an activation condition is met, controlling a rotor of a three-phase motor to move until an axial direction of a direct-axis is the same as an axial direction of a stator winding corresponding to a set phase bridge leg among three-phase bridge legs of a motor controller; and controlling six power switches of the three-phase bridge legs to alternately perform an energy storage process on three-phase stator windings corresponding to the three-phase bridge legs by a power battery and a charging process on the power battery by the three-phase stator windings using stored energy, where the three-phase bridge legs include a first target bridge leg and a second target bridge leg, during the energy storage process, both an upper bridge leg switch of one of the first target bridge leg and the second target bridge leg and a lower bridge leg switch of the other of the first target bridge leg and the second target bridge leg are controlled to be turned on, and other power switches are controlled to be turned off, and during the charging process, all the six power switches are controlled to be turned off, where one of the first target bridge leg and the second target bridge leg with fewer bridge legs is the set phase bridge leg.

## Description

### TECHNICAL FIELD

The present disclosure relates to the field of vehicle technologies, and in particular, to a vehicle control method and a vehicle.

### BACKGROUND

The charging and discharging performance of a power battery directly affects the performance of a vehicle. However, in low-temperature environments, the capability of the power battery to output current continuously is greatly reduced. In order to improve the performance of the power battery, in some technologies, a pulse heating technology is adopted. In the pulse heating technology, based on circuitry of a stator winding and a motor controller of a three-phase motor, three-phase bridge legs and three-phase windings are configured in a two-phase synchronously parallel connection, a motor control module of the motor controller outputs a drive signal to a target upper bridge leg switch module and a target lower bridge leg switch module, so as to control the target upper bridge leg switch module and the target lower bridge leg switch module to be periodically turned on and off, and control other power switches to be turned off. When the target upper bridge leg switch module and the target lower bridge leg switch module are turned on, the power battery discharges to energize the three-phase windings and store energy therein, and when the target upper bridge leg switch module and the target lower bridge leg switch module are turned off, the three-phase windings discharge to charge the power battery. In this way, a high-frequency pulse current can be generated across terminals of the power battery. This utilizes the characteristic of a relatively high internal resistance of the power battery in the low-temperature environments to generate heat for heating.

In this case, Insulated Gate Bipolar Transistors (IGBTs) of the power switches in both the target upper bridge leg switch module and the target lower bridge leg switch module need to be controlled to be turned on and off frequently. Specifically, a preset direct-axis (d-axis) current and a preset quadrature-axis (q-axis) current (which is generally zero) need to be determined according to a heating requirement. A preset direct-axis voltage and a preset quadrature-axis voltage are obtained through decoupling of the preset direct-axis current and the preset quadrature-axis current. An inverse Park transformation is performed on the preset direct-axis voltage and the preset quadrature-axis voltage in combination with a position signal of a rotor of the motor, where a dq rotating coordinate system is transformed into an αβ stationary coordinate system to obtain an α-axis voltage vector Uα and a β-axis voltage vector Uβ. Then, the α-axis voltage vector Uα and the β-axis voltage vector Uβ are decomposed by using a space vector transformation method to obtain components on two basic voltage vectors. According to switching combinations of six power switches of the three-phase bridge legs, excluding two zero voltage vectors produced when all switches are turned on and off, there are six basic voltage vectors, and in the αβ stationary coordinate system, a resultant vector of the α-axis voltage vector Uα and the β-axis voltage vector Uβ may be decomposed into components of two adjacent basic voltage vectors. Finally, the required working time for the two basic voltage vectors is calculated, and control signals for the three-phase bridge legs of the motor controller of the three-phase motor are generated accordingly, that is, control signals for individual IGBTs are generated. Therefore, on the one hand, during pulse heating, complex calculations need to be performed according to the position of the rotor of the motor, resulting in a heavy computational load; on the other hand, the resultant vector of the α-axis voltage vector Uα and the β-axis voltage vector Uβ needs to be synthesized jointly by two basic voltage vectors, resulting in certain losses, and the efficiency of the pulse heating needs to be improved, the pulse heating performance of the power battery is affected, and the performance of the vehicle in the low-temperature environments is affected.

### SUMMARY

The present disclosure aims to solve at least one aspect of the above problems to some extent.

In a first aspect, the present disclosure provides a vehicle control method, including:
receiving a request to enable a pulse heating function;
when an activation condition is met, controlling a rotor of a three-phase motor to move until an axial direction of a direct-axis is the same as an axial direction of a stator winding corresponding to a set phase bridge leg among three-phase bridge legs of a motor controller; and
controlling six power switches of the three-phase bridge legs to alternately perform an energy storage process on three-phase stator windings corresponding to the three-phase bridge legs by a power battery and a charging process on the power battery by the three-phase stator windings using stored energy, where the three-phase bridge legs include a first target bridge leg and a second target bridge leg, during the energy storage process, both an upper bridge leg switch of one of the first target bridge leg and the second target bridge leg and a lower bridge leg switch of the other of the first target bridge leg and the second target bridge leg are controlled to be turned on, and other power switches are controlled to be turned off, and during the charging process, all the six power switches are controlled to be turned off, where one of the first target bridge leg and the second target bridge leg with fewer bridge legs is the set phase bridge leg.

Optionally, controlling the six power switches of the three-phase bridge legs includes:
controlling the six power switches alternately in accordance with a first control, a second control, a third control, and a fourth control; where during the first control, an upper bridge leg switch of the first target bridge leg and a lower bridge leg switch of the second target bridge leg are controlled to be turned on, and other power switches are controlled to be turned off; during the third control, a lower bridge leg switch of the first target bridge leg and an upper bridge leg switch of the second target bridge leg are controlled to be turned on, and other power switches are controlled to be turned off; and during the second control and the fourth control, all the six power switches are controlled to be turned off.

Optionally, controlling the six power switches of the three-phase bridge legs includes:
acquiring a current internal resistance of the power battery, and searching for a switching frequency request value and a direct-axis voltage request value corresponding to the current internal resistance in a first preset correspondence according to the current internal resistance;
generating pulse width modulation signals for the six power switches according to the switching frequency request value and the direct-axis voltage request value; and
controlling switching of the six power switches according to the pulse width modulation signals.

Optionally, controlling the six power switches of the three-phase bridge legs further includes: before generating the pulse width modulation signals for the six power switches according to the switching frequency request value and the direct-axis voltage request value,
acquiring a heating level request value and an SOC value of the power battery, and searching for a switching frequency adjustment coefficient and a direct-axis voltage adjustment coefficient corresponding to the heating level request value and the SOC value in a second preset correspondence according to the heating level request value and the SOC value; and
updating the switching frequency request value according to the switching frequency adjustment coefficient and the switching frequency request value, and updating the direct-axis voltage request value according to the direct-axis voltage adjustment coefficient and the direct-axis voltage request value.

Optionally, controlling the six power switches of the three-phase bridge legs further includes: before generating the pulse width modulation signals for the six power switches according to the switching frequency request value and the direct-axis voltage request value,
acquiring over-temperature information of the motor controller and the three-phase motor, when it is determined, according to the over-temperature information, that the motor controller or the three-phase motor is in an over-temperature state, reducing the direct-axis voltage request value, and updating the direct-axis voltage request value with a reduced direct-axis voltage request value; and/or
acquiring overcurrent information of the motor controller and the three-phase motor, when it is determined, according to the overcurrent information, that the motor controller or the three-phase motor is in an overcurrent state, reducing the direct-axis voltage request value, and updating the direct-axis voltage request value with a reduced direct-axis voltage request value; and/or
acquiring an NVH level of the vehicle, when the NVH level exceeds a preset value, reducing the direct-axis voltage request value, and updating the direct-axis voltage request value with a reduced direct-axis voltage request value.

Optionally, the activation condition includes one or more of:
the three-phase motor meeting a first condition for pulse heating, and
the power battery meeting a second condition for pulse heating;
where the first condition includes the three-phase motor being free of a set fault, the set fault includes a fault that the three-phase motor cannot output a torque, and the set fault further includes a fault that the three-phase stator windings of the three-phase motor cannot be charged or discharged; and
the second condition includes one or more of:
   the SOC value of the power battery being greater than or equal to a preset SOC value;
   a minimum temperature of cells of the power battery being less than or equal to a preset minimum temperature;
   a temperature difference among the cells of the power battery being less than or equal to a preset temperature difference;
   an internal resistance of the power battery being greater than or equal to a preset internal resistance; and
   the power battery being in a state ready for high-voltage power-up and instantaneous charge-discharge.

Optionally, the activation condition further includes: an operating state of the vehicle meets a third condition for pulse heating; and the third condition includes one or more of:
a transmission of the vehicle being in P gear;
a speed of the vehicle being less than a preset speed;
a parking system of the vehicle being in a parking state; and
the vehicle being not in an external discharging process or a charging process.

Optionally, the vehicle control method further includes:
stopping control of the six power switches upon a request to disable the pulse heating function is received or the operating state of the vehicle meets a condition for disabling the pulse heating function.

In a second aspect, the present disclosure provides a vehicle, including a motor controller, a battery controller, and a control unit, where the motor controller includes a motor control module and three-phase bridge legs, upper ends of the three-phase bridge legs are connected to a positive terminal of a power battery, lower ends of the three-phase bridge legs are connected to a negative terminal of the power battery, midpoints of the three-phase bridge legs are respectively connected to three-phase stator windings of a three-phase motor, control terminals of six power switches of the three-phase bridge legs are connected to the motor control module, the control unit is respectively connected to the motor controller and the battery controller, and the control unit is configured to implement the vehicle control method according to the first aspect described above.

Optionally, the vehicle controller is connected to a multimedia interaction system of the vehicle and receives the request to enable the pulse heating function through the multimedia interaction system, and/or the vehicle controller is connected to an antenna module of the vehicle and receives the request to enable the pulse heating function from a remote client through the antenna module.

Compared with the related art, in the vehicle control method and vehicle according to the present disclosure, when the activation condition is met, the rotor of the three-phase motor is controlled to move until the axial direction of the direct-axis is the same as the axial direction of the stator winding corresponding to the set phase bridge leg among the three-phase bridge legs of the motor controller, and the six power switches of the three-phase bridge legs are controlled to alternately perform the energy storage process and the charging process. Specifically, both the upper bridge leg switch of one of the first target bridge leg and the second target bridge leg and the lower bridge leg switch of the other of the first target bridge leg and the second target bridge leg are controlled to be turned on, and the other power switches are controlled to be turned off, so that the energy storage process on the three-phase stator windings corresponding to the three-phase bridge legs is performed by the power battery; and all the six power switches are controlled to be turned off, so that the charging process on the power battery is performed by the three-phase stator windings using the stored energy, thereby pulse heating can be performed on the power battery. In addition, one of the first target bridge leg and the second target bridge leg with fewer bridge legs is the set phase bridge leg. In this way, during a process of generating control signals for the six power switches through calculation according to a current required for the pulse heating, a basic voltage vector (for example, a basic voltage vector V1(100)) corresponding to "an upper bridge leg switch of the set phase bridge leg and lower bridge leg switches of other phase bridge legs being turned on and other power switches being turned off", or a basic voltage vector (for example, a basic voltage vector V4(011)) corresponding to "a lower bridge leg switch of the set phase bridge leg and upper bridge leg switches of other phase bridge legs being turned on and other power switches being turned off" can meet the requirements for voltage vectors in a corresponding αβ stationary coordinate system. On the one hand, the computational load of voltage vector control during the pulse heating process can be reduced to some extent, thereby lowering the computational power requirements, and reducing the computational demands on the control unit, which in turn saves costs. On the other hand, the corresponding space voltage vector requirements can be met by relying solely on a single basic voltage vector, eliminating the need for relying on two basic voltage vectors. Thus, the energy consumption can be reduced to some extent, ensuring the efficiency of pulse heating for the battery in low-temperature conditions and enhancing the vehicle performance.

### BRIEF DESCRIPTION OF DRAWINGS

FIG. 1 is a flowchart of a vehicle control method according to an embodiment of the present disclosure.
FIG. 2 is a flowchart of a vehicle control method according to another embodiment of the present disclosure.
FIG. 3 is a schematic diagram of a flow direction of a current at a certain time during a first control according to an embodiment of the present disclosure.
FIG. 4 is a schematic diagram of a flow direction of a current at a certain time during a second control according to an embodiment of the present disclosure.
FIG. 5 is a schematic diagram of a flow direction of a current at a certain time during a third control according to an embodiment of the present disclosure.
FIG. 6 is a schematic diagram of a flow direction of a current at a certain time during a fourth control according to an embodiment of the present disclosure.
FIG. 7 illustrates sinusoidal control waveforms of a direct-axis voltage and a quadrature-axis voltage over time within a control cycle period according to an embodiment of the present disclosure.
FIG. 8 illustrates sinusoidal control waveforms of a direct-axis current and a quadrature-axis current over time within a control cycle period according to an embodiment of the present disclosure.
FIG. 9 illustrates waveforms of three-phase winding currents over time within a control cycle period according to an embodiment of the present disclosure.
FIG. 10 illustrates a waveform of a bus current over time within a control cycle period according to an embodiment of the present disclosure.
FIG. 11 illustrates six basic voltage vectors used in space vector transformation.

Description of reference numerals:
1- motor controller; 11-motor control module; 2-three-phase motor; 3-vehicle controller; 4-power battery; 5-supercapacitor.

### DETAILED DESCRIPTION

In order to make the above objectives, features and advantages of the present disclosure more apparent and understandable, specific embodiments of the present disclosure will be described in detail below in conjunction with the accompanying drawings.

In the description of the present disclosure, it should be noted that, unless otherwise expressly specified and defined, the terms "install", "connect", and "couple" should be understood in a broad sense, for example, they may refer to fixed connections, detachable connections, or integral connections; or they may refer to direct connections or indirect connections through an intermediate medium. For those ordinary skilled in the art, the specific meanings of the above terms in the present disclosure may be understood according to specific situations.

Reference throughout description of this specification to "an embodiment," "one embodiment," "some implementations," "exemplarily," and "one implementation" means that a particular feature, structure, material, or characteristic described in connection with the embodiment or implementation is included in at least one embodiment or implementation of the present disclosure. In this specification, schematic expressions of the above terms do not necessarily refer to the same embodiment or implementation. Furthermore, the particular feature, structure, material, or characteristic described may be combined in any suitable manner in any one or more embodiments or implementations.

The terms "first", "second", etc. are used for descriptive purposes only and are not to be construed as indicating or implying relative importance or implicitly indicating the number of technical features indicated. In this way, feature defined with "first" and "second" may explicitly or implicitly include at least one of the feature.

An embodiment of the present disclosure provides a vehicle control method applied to a vehicle.

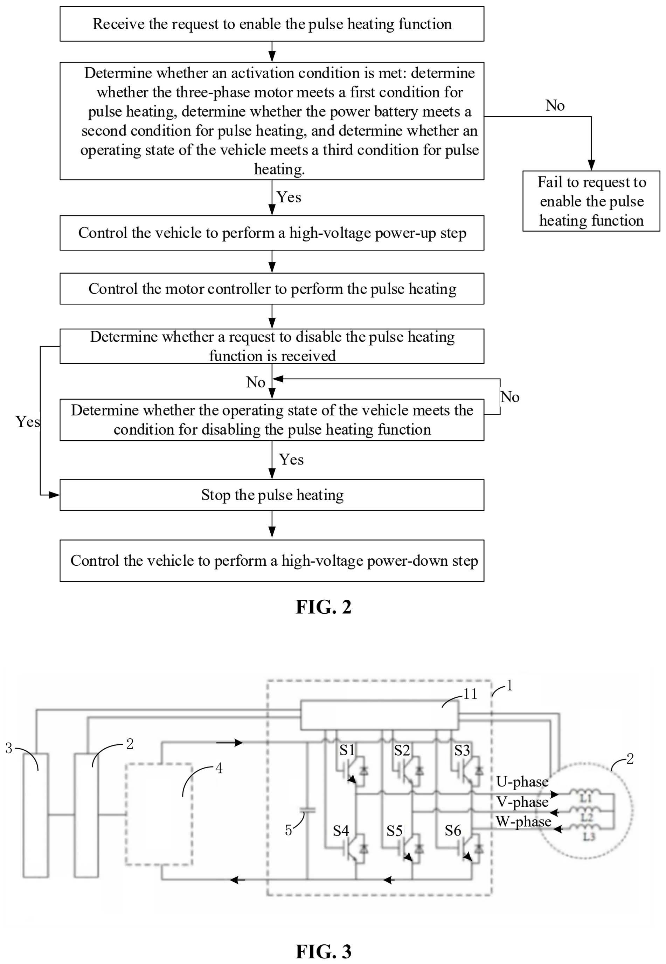

Referring to FIG. 3, in this embodiment, the vehicle may include a motor controller 1, a battery controller, and a control unit. The motor controller 1 includes a motor control module 11 and three-phase bridge legs. Upper ends of the three-phase bridge legs are connected to a positive terminal of a power battery 4, lower ends of the three-phase bridge legs are connected to a negative terminal of the power battery 4, midpoints of the three-phase bridge legs are respectively connected to three-phase stator windings of a three-phase motor 2, and control terminals of six power switches of the three-phase bridge legs are connected to the motor control module 11. The control unit is respectively connected to the motor controller 1 and the battery controller.

Specifically, the control terminals of the six power switches are respectively connected to six control output terminals of the motor control module 11, and a motor-speed signal output terminal and a motor-rotor position signal output terminal of the three-phase motor 2 are respectively connected to two signal acquisition terminals of the motor control unit, which may adopt the related art. The three-phase bridge legs are respectively a phase-A bridge leg, a phase-B bridge leg, and a phase-C bridge leg (not shown in the figure). The phase-A bridge leg includes an upper bridge leg switch S1 and a lower bridge leg switch S4. The phase-B bridge leg includes an upper bridge leg switch S2 and a lower bridge leg switch S5. The phase-C bridge leg includes an upper bridge leg switch S3 and a lower bridge leg switch S6. Midpoints of the phase-A bridge leg, the phase-B bridge leg, and the phase-C bridge leg are correspondingly connected to a phase-U stator winding L1, a phase-V stator winding L2, and a phase-W stator winding L3, respectively. The motor controller 1 may further include a supercapacitor 5 connected in parallel with the three-phase bridge legs.

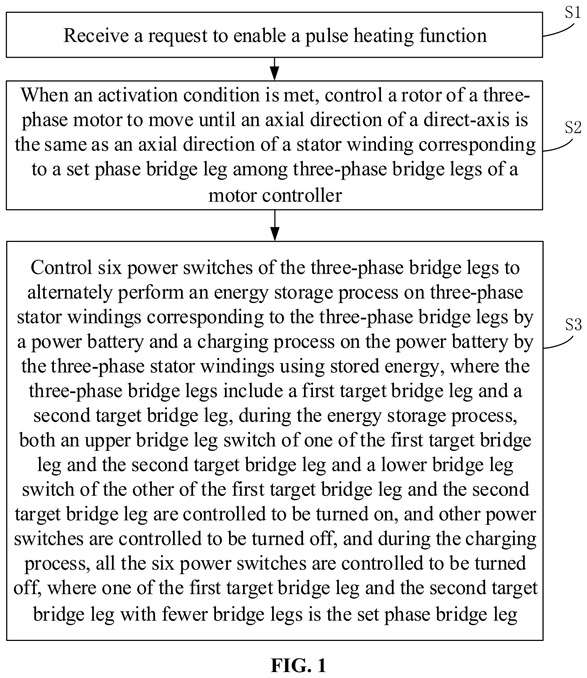

As shown in FIG. 1, the vehicle control method includes:
step S1, receiving a request to enable a pulse heating function;
step S2, when an activation condition is met, controlling a rotor of a three-phase motor 2 to move until an axial direction of a direct-axis is the same as an axial direction of a stator winding corresponding to a set phase bridge leg among three-phase bridge legs of a motor controller 1; and
step S3: controlling six power switches of the three-phase bridge legs to alternately perform an energy storage process on three-phase stator windings corresponding to the three-phase bridge legs by a power battery 4 and a charging process on the power battery 4 by the three-phase stator windings using stored energy, where the three-phase bridge legs include a first target bridge leg and a second target bridge leg, during the energy storage process, both an upper bridge leg switch of one of the first target bridge leg and the second target bridge leg and a lower bridge leg switch of the other of the first target bridge leg and the second target bridge leg are controlled to be turned on, and other power switches are controlled to be turned off, and during the charging process, all the six power switches are controlled to be turned off, where one of the first target bridge leg and the second target bridge leg with fewer bridge legs is the set phase bridge leg.

Specifically, the control unit, by controlling the motor controller 1, sends relevant instructions for performing the pulse heating function to, for example, the motor control module 11 of the motor controller 1, so that the six power switches can be controlled by the motor control module 11. A manner of receiving the request to enable the pulse heating function and a manner of determining whether the activation condition is met may both be implemented using related technologies.

In this specification, a case in which the first target bridge leg includes only a phase-A bridge leg and the second target bridge leg includes a phase-B bridge leg and a phase-C bridge leg will be described below as an example. In this case, the set phase bridge leg is the phase-A bridge leg. However, the present disclosure is not limited thereto. For example, the first target bridge leg may include a phase-A bridge leg and a phase-C bridge leg, and in this case, the second target bridge leg includes a phase-B bridge leg, which will not be described in detail later.

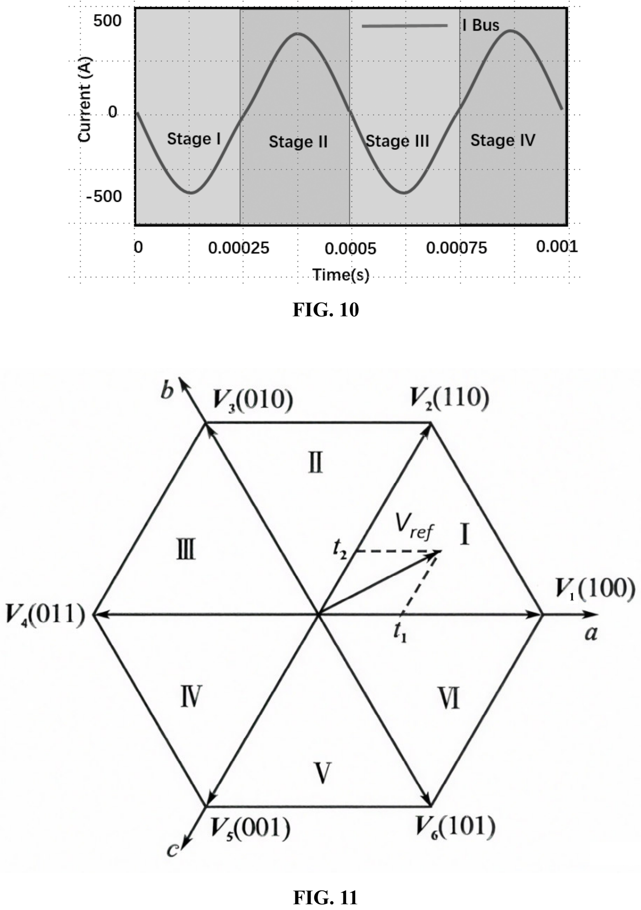

FIG. 11 illustrates six basic voltage vectors used in space vector transformation, where Vref is a resultant vector of an α-axis voltage vector Uα and a β-axis voltage vector Uβ, and when the resultant vector Vref is located in a section I in FIG. 1, the resultant vector Vref has component vectors in directions of two basic voltage vectors V1(110) and V2(110). Here, V1(100) represents that the upper bridge leg switch S1 of the phase-A bridge leg is turned on (IGBT is turned on), the lower bridge leg switch S5 of the phase-B bridge leg and the lower bridge leg switch S6 of the phase-C bridge leg are turned on, and other power switches are turned off; and V2(110) represents that the upper bridge leg switch S1 of the phase-A bridge leg is turned on (IGBT is turned on), the upper bridge leg switch S2 of the phase-B bridge leg is turned on, the lower bridge leg switch S6 of the phase-C bridge leg is turned on, and other power switches are turned off.

At this time, specifically, in the step S2, the rotor of the three-phase motor 2 is controlled to move until the axial direction of the direct-axis coincides with an axial direction of the phase-U stator winding L1. Here, the control unit implements this step S2 through the motor control module 11. In the subsequent pulse heating process, the position of the rotor does not need to be changed. The direct-axis, the α-axis and an axis of the phase-U stator winding coincide with each other, and the quadrature-axis and the β-axis coincide with each other. Then an inverse Park transformation is performed on a direct-axis voltage request value and a preset quadrature-axis voltage, to obtain the α-axis voltage vector Uα and the β-axis voltage vector Uβ, where the preset quadrature-axis voltage is generally zero. When the α-axis voltage vector Uα and the β-axis voltage vector Uβ are obtained, only the α-axis voltage vector Uα is provided, and the β-axis voltage vector Uβ is zero. Only one basic voltage vector is required to meet the requirements for the α-axis voltage vector Uα and the β-axis voltage vector Uβ. Specifically, the basic voltage vector is consistent with the α-axis voltage vector Uα. In this way, on the one hand, the computational load of voltage vector control during the pulse heating process can be reduced to some extent, thereby lowering the computational power requirements and reducing the computational demands on the control unit, which in turn saves costs; on the other hand, the corresponding space voltage vector requirements can be met by relying solely on a single basic voltage vector, eliminating the need for relying on two basic voltage vectors, so that the energy consumption can be reduced to some extent.

If the axial direction of the direct-axis does not coincide with an axis of any phase stator winding, and the resultant vector Vref has component vectors in the directions of two of the basic voltage vectors, as shown in FIG. 11 for example, duty cycles of control signals for the upper bridge leg switch S1 and the upper bridge leg switch S2 may be different from each other, and there is internal consumption of currents within the three-phase windings, resulting in energy consumption.

In this way, in the present disclosure, when the activation condition is met, the rotor of the three-phase motor 2 is controlled to move until the axial direction of the direct-axis is the same as the axial direction of the stator winding corresponding to the set phase bridge leg among the three-phase bridge legs of the motor controller 1, and the six power switches of the three-phase bridge legs are controlled to alternately perform the energy storage process and the charging process. Specifically, both the upper bridge leg switch of one of the first target bridge leg and the second target bridge leg and the lower bridge leg switch of the other of the first target bridge leg and the second target bridge leg are controlled to be turned on, and the other power switches are controlled to be turned off, so that the energy storage process on the three-phase stator windings corresponding to the three-phase bridge legs is performed by the power battery 4; and all the six power switches are controlled to be turned off, so that the charging process on the power battery 4 is performed by the three-phase stator windings using the stored energy, thereby pulse heating can be performed on the power battery 4. In addition, one of the first target bridge leg and the second target bridge leg with fewer bridge legs is the set phase bridge leg. In this way, during a process of generating control signals for the six power switches through calculation according to a current required for the pulse heating, a basic voltage vector (for example, a basic voltage vector V1(100)) corresponding to "an upper bridge leg switch of the set phase bridge leg and lower bridge leg switches of other phase bridge legs being turned on and other power switches being turned off", or a basic voltage vector (for example, a basic voltage vector V4(011)) corresponding to "a lower bridge leg switch of the set phase bridge leg and upper bridge leg switches of other phase bridge legs being turned on and other power switches being turned off" can meet the requirements for voltage vectors in a corresponding αβ stationary coordinate system. On the one hand, the computational load of voltage vector control during the pulse heating process can be reduced to some extent, thereby lowering the computational power requirements, and reducing the computational demands on the control unit, which in turn saves costs. On the other hand, the corresponding space voltage vector requirements can be met by relying solely on a single basic voltage vector, eliminating the need for relying on two basic voltage vectors. Thus, the energy consumption can be reduced to some extent, ensuring the efficiency of pulse heating for the battery in low-temperature conditions and enhancing the vehicle performance.

In addition, by combining a motor rotor positioning and a phase current balancing control technology, a charging torque caused by an initial position of the rotor and a structural asymmetry of the motor can be eliminated, and a torque acting on the motor rotor is almost zero, so as to suppress noise or vibration in the three-phase motor 2 during the pulse heating process.

It should be noted that a switching process of the IGBT is mainly controlled by a gate voltage. Due to a parasitic capacitance between a gate and an emitter, current change rates are different during turn-on and turn-off in switching control of the IGBT. Specifically, the current changes quickly when the IGBT is turned on (this process is the energy storage process on the three-phase windings by the power battery), and the current changes slowly when the IGBT is turned off (this process is the charging process on the power battery by the three-phase windings). Therefore, when, for example, a high-frequency pulse signal with a duty cycle of 50% is applied to the IGBT, the energy stored in the three-phase windings cannot be completely released, and may be accumulated and carried over to the next energy storage process. Although this problem is avoided as much as possible by reducing the duty cycle at present, there is an accumulated error, which can easily lead to current rise, progressive increase in the phase current, and even overcurrent faults. Moreover, reducing the duty cycle may cause a decrease in current amplitude, thereby affecting the performance of heating for the power battery. In addition, this control manner involves high switching frequencies for some of the IGBTs in both the target upper and lower bridge leg switch modules, which easily causes device damage, affects the performance of pulse heating for the power battery, and affects the vehicle performance in the low-temperature environments.

In order to solve this problem, the present disclosure further improves the specific steps of pulse heating. Specifically, in the step S3, controlling the six power switches of the three-phase bridge legs includes:
controlling the six power switches alternately in accordance with a first control, a second control, a third control, and a fourth control; where during the first control, an upper bridge leg switch of the first target bridge leg and a lower bridge leg switch of the second target bridge leg are controlled to be turned on, and the other power switches are controlled to be turned off; during the third control, a lower bridge leg switch of the first target bridge leg and an upper bridge leg switch of the second target bridge leg are controlled to be turned on, and the other power switches are controlled to be turned off; and during the second control and the fourth control, all the six power switches are controlled to be turned off.

As shown in FIG. 3, FIG. 3 corresponds to a certain time during the first control. In this case, the upper bridge leg switch S1 of the phase-A bridge leg, the lower bridge leg switch S5 of the phase-B bridge leg, and the lower bridge leg switch S6 of the phase-C bridge leg are turned on, and the lower bridge leg switch S4 of the phase-A bridge leg, the upper bridge leg switch S2 of the phase-B bridge leg, and the upper bridge leg switch S3 of the phase-C bridge leg are turned off. Current flows from the positive terminal of the power battery 4 into the phase-U stator winding L1 through the upper bridge leg switch S1, and then is split into two parallel paths, where in a first path, the current flows out of the motor controller 1 through a phase-V stator winding L2 and the lower bridge leg switch S5, and in a second path, the current flows out of the motor controller 1 through a phase-W stator winding L3 and the lower bridge leg switch S6. The current from the first path and the second path finally flows into the negative terminal of the power battery 4. Under the first control, the power battery 4 performs a first energy storage process on the phase-U stator winding L1, the phase-V stator winding L2, and the phase-W stator winding L3.

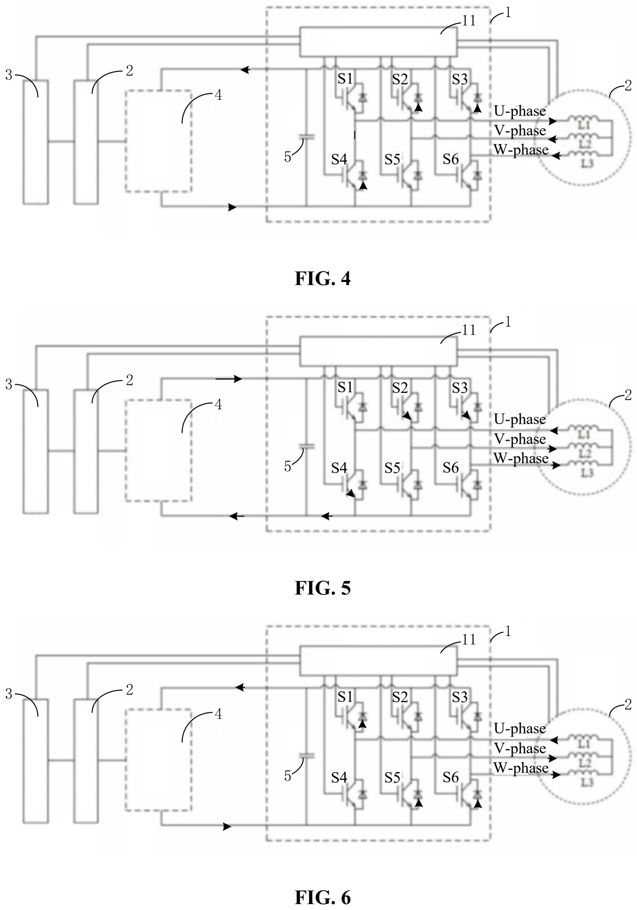

As shown in FIG. 4, FIG. 4 corresponds to a certain time during the second control. In this case, the upper bridge leg switch S1 and the lower bridge leg switches S5 and S6 are turned off, and the lower bridge leg switch S4 and the upper bridge leg switches S2 and S3 remain turned off, that is, the upper bridge leg switches S1, S2 and S3 and the lower bridge leg switches S4, S5 and S6 are all turned off. Due to characteristics of an inductor, directions of currents in the phase-U stator winding L1, the phase-V stator winding L2, and the phase-W stator winding L3 may not be changed immediately. The current flowing out of the phase-V stator winding L2 flows out of the motor controller 1 through a freewheeling diode of the upper bridge leg switch S2. The current flowing out of the phase-W stator winding L3 flows out of the motor controller 1 through a freewheeling diode of the upper bridge leg switch S3, then flows into the positive terminal of the power battery 4, flows out of the negative terminal of the power battery 4, and then flows into the phase-U stator winding L1 through a freewheeling diode of the lower bridge leg switch S4. In this way, a freewheeling loop is formed. Under the second control, the current flows into the positive terminal of the power battery 4 and flows out of the negative terminal of the power battery 4, that is, a direction of the current flowing through the power battery 4 is opposite to that of the current in the first energy storage process, and the phase-U stator winding L1, the phase-V stator winding L2, and the phase-W stator winding L3 perform a first charging process on the power battery 4.

As shown in FIG. 5, FIG. 5 corresponds to a certain time during the third control. In this case, the lower bridge leg switch S4 and the upper bridge leg switches S2 and S3 are turned on, and the upper bridge leg switch S1 and the lower bridge leg switches S5 and S6 remain turned off. The current flows out of the positive terminal of the power battery 4 and then is split into two parallel paths, where in a first path, the current flows through the upper bridge leg switch S2 and the phase-V stator winding L2, and in a second path, the current flows through the upper bridge leg switch S3 and the phase-W stator winding L3. The current from the first path and the second path converges, then flows out of the motor controller 1 through the phase-U stator winding L1 and the lower bridge leg switch S4, and finally flows into the negative terminal of the power battery 4. Under the third control, the power battery 4 performs a second energy storage process on the phase-U stator winding L1, the phase-V stator winding L2 and the phase-W stator winding L3.

As shown in FIG. 6, FIG. 6 corresponds to a certain time during the fourth control. In this case, the lower bridge leg switch S4 and the upper bridge leg switches S2 and S3 are turned off, and the upper bridge leg switch S1 and the lower bridge leg switches S5 and S6 remain turned off, that is, the six power switches are all turned off. Directions of currents in the phase-U stator winding L1, the phase-V stator winding L2, and the phase-W stator winding L3 may not be changed immediately. The current flowing out of the phase-U stator winding L1 flows out of the motor controller 1 through a freewheeling diode of the upper bridge leg switch S1, and then flows into the positive terminal of the power battery 4. The current flows out of the negative terminal of the power battery 4 and is split into two parallel paths, where in a first path, the current flows through a freewheeling diode of the lower bridge leg switch S5 and the phase-V stator winding L2, and in a second path, the current flows through a freewheeling diode of the lower bridge leg switch S6 and the phase-W stator winding L3. The current from the first path and the second path converges into the phase-U stator winding L1. In this way, a freewheeling loop is formed. Under the fourth control, the current flows into the positive terminal of the power battery 4 and flows out of the negative terminal of the power battery 4, that is, a direction of the current flowing through the power battery 4 is opposite to that of the current in the second energy storage process, and the phase-U stator winding L1, the phase-V stator winding L2, and the phase-W stator winding L3 perform a second charging process on the power battery 4.

In this way, during the first control, the upper bridge leg switch of the first target bridge leg and the lower bridge leg switch of the second target bridge leg are controlled to be turned on, and the other power switches are controlled to be turned off, so that the power battery 4 performs the first energy storage process on the three-phase stator windings. During the second control, all the power switches are turned off, so that the three-phase stator windings perform the first charging process on the power battery 4 by using the stored energy. The first energy storage process and the first charging process jointly form a first energy storage and charging process. During the third control, the lower bridge leg switch of the first target bridge leg and the upper bridge leg switch of the second target bridge leg are controlled to be turned on, and the other power switches are controlled to be turned off, so that the power battery 4 performs the second energy storage process on the three-phase stator windings, in which case the direction of the current in the three-phase stator windings is opposite to the direction of the current in the three-phase stator windings during the first control. During the fourth control, all the power switches are turned off, so that the three-phase stator windings perform the second charging process on the power battery 4 by using the stored energy. The second energy storage process and the second charging process jointly form a second energy storage and charging process. The six power switches of the three-phase bridge legs are controlled alternately in accordance with the first control, the second control, the third control, and the fourth control. Each cycle may involve one first energy storage and charging process and one second energy storage and charging process. Moreover, the direction of the current in the three-phase stator windings in the first energy storage and charging process is opposite to the direction of the current in the three-phase stator windings in the second energy storage and charging process. If a residual current remains from a previous energy storage and charging process due to improper settings of control parameters such as duty cycles or control errors, adverse effects caused by the residual current from the previous energy storage and charging process can be eliminated to some extent by the opposite current generated during the next energy storage and charging process, so as to avoid the current rise caused by accumulation of electric energy, avoid overcurrent faults caused by excessive phase currents in the stator windings, and ensure the pulse heating performance. In this way, complete reliance on relatively low duty cycles to prevent the residual current can be avoided to some extent, which is beneficial to use relatively high duty cycles to increase the current amplitude at a fixed switching frequency, thereby improving the pulse heating rate and improving the pulse heating performance. In addition, the power battery 4 performs two discharging and charging cycles per cycle, and each power switch only needs to be turned on and off once, which can reduce the switching frequencies of the power switches, extend the service life of the power switches, and improve the pulse heating performance, thereby improving the vehicle performance in the low-temperature environments.

Optionally, controlling the six power switches of the three-phase bridge legs includes:
acquiring a current internal resistance of the power battery 4, and searching for a switching frequency request value and a direct-axis voltage request value corresponding to the current internal resistance in a first preset correspondence according to the current internal resistance;
generating pulse width modulation signals for the six power switches according to the switching frequency request value and the direct-axis voltage request value; and
controlling switching of the six power switches according to the pulse width modulation signals.

Specifically, generating the pulse width modulation signals for the six power switches according to the switching frequency request value and the direct-axis voltage request value includes:
performing inverse Park transformation on the direct-axis voltage request value and a preset quadrature-axis voltage according to a position signal of the rotor of the three-phase motor, to obtain an α-axis voltage vector Uα and a β-axis voltage vector Uβ, where the preset quadrature-axis voltage is zero;
generating a pulse signal according to the switching frequency request value;
calculating turn-on times of the six power switches according to the α-axis voltage vector Uα and the β-axis voltage vector Uβ, and forming initial pulse width modulation signals for the six power switches in combination with the switching frequency request value; and
performing an AND operation on the initial pulse width modulation signals and the pulse signal, and using a result of the AND operation as actual pulse width modulation signals for the six power switches.

This part may be implemented using related technologies, which will not be described in detail herein.

The first preset correspondence may be a first preset correspondence table, in which a plurality of current internal resistances, along with switching frequency request values and direct-axis voltage request values corresponding to the plurality of current internal resistances, which are determined through tests, are stored. In the tests, the switching frequency request value and the direct-axis voltage request value corresponding to the current internal resistance are selected mainly according to heating efficiency and the like, and the direct-axis voltage request value is a voltage amplitude. Here, it should be understood that the current internal resistance in the first preset correspondence may actually be a range of internal resistances. For example, a higher current internal resistance corresponds to a higher switching frequency request value, and a higher direct-axis voltage request value.

In this way, with the power battery 4 having different current internal resistances, the switching frequency request value and the direct-axis voltage request value that match the current internal resistance of the power battery 4 may be obtained based on the first preset correspondence predetermined through tests, and the six power switches are controlled based on the switching frequency request value and the direct-axis voltage request value that match the current internal resistance of the power battery 4, instead of using a constant switching frequency request value and a constant direct-axis voltage request value in any case, which is more in line with actual situations of the power battery 4, and helps improve adaptability of the vehicle control method to the power battery 4 and improve the pulse heating performance.

The switching (i.e., on and off) of the six power switches is controlled according to the pulse width modulation signals, and the six power switches are controlled alternately in accordance with the first control, the second control, the third control, and the fourth control according to the pulse width modulation signals.

Optionally, controlling the six power switches of the three-phase bridge legs further includes: before generating the pulse width modulation signals for the six power switches according to the switching frequency request value and the direct-axis voltage request value,
acquiring a heating level request value and a State of Charge (SOC, which indicates a remaining capacity of the power battery 4, with a value defined as a ratio of the remaining capacity to a total capacity of the power battery 4, commonly expressed as a percentage) value of the power battery 4, and searching for a switching frequency adjustment coefficient and a direct-axis voltage adjustment coefficient corresponding to the heating level request value and the SOC value in a second preset correspondence according to the heating level request value and the SOC value; and
updating the switching frequency request value according to the switching frequency adjustment coefficient and the switching frequency request value, and updating the direct-axis voltage request value according to the direct-axis voltage adjustment coefficient and the direct-axis voltage request value.

Specifically, the switching frequency request value is updated with a product of the switching frequency adjustment coefficient and the switching frequency request value; and the direct-axis voltage request value is updated with a product of the direct-axis voltage adjustment coefficient and the direct-axis voltage request value.

The heating level request value includes a first level request value, a second level request value, a third level request value, and so on. For example, with the same SOC value of the power battery 4, when the heating level request value is set to the first level request value, the second level request value, and the third level request value, respectively, the switching frequency adjustment coefficient increases sequentially, the direct-axis voltage adjustment coefficient increases sequentially, and so on.

Exemplarily, with the same heating level request value, the higher the SOC value of the power battery 4 is, the higher the corresponding switching frequency adjustment coefficient is, the higher the corresponding direct-axis voltage adjustment coefficient is, and so on.

In this way, after the switching frequency request value and the direct-axis voltage request value corresponding to the current internal resistance are found in the first preset correspondence according to the current internal resistance, the switching frequency request value and the direct-axis voltage request value may be adjusted according to the heating level request value and the SOC value, i.e., according to a heating demand and the remaining capacity of the power battery 4, so that the final switching frequency request value and direct-axis voltage request value are more in line with an actual heating level demand and supportability of the remaining capacity, and thus the rationality of the pulse heating parameters is improved.

In a further optional embodiment, the current internal resistance is obtained at a first preset frequency, and the switching frequency request value and the direct-axis voltage request value corresponding to the current internal resistance are obtained accordingly; and the heating level request value and the SOC value of the power battery 4 are obtained at a second preset frequency, and the switching frequency request value and the direct-axis voltage request value are updated accordingly, where the first preset frequency is higher than or equal to the second preset frequency.

In this way, as the pulse heating time increases, a temperature of the power battery 4 may increase, and correspondingly, the current internal resistance of the power battery 4 may decrease. The current internal resistance is obtained at the first preset frequency and the switching frequency request value and the direct-axis voltage request value corresponding thereto are obtained accordingly, and the switching frequency request value and the direct-axis voltage request value are updated at the second preset frequency, and thus more suitable switching frequency request value and direct-axis voltage request value can be finally obtained. During the pulse heating process, the heating level request value and the SOC value of the power battery 4 may not be changed very frequently. When the first preset frequency is set to be higher than the second preset frequency, an adjustment frequency of the switching frequency adjustment coefficient and an adjustment frequency of the direct-axis voltage adjustment coefficient can be reduced.

Optionally, controlling the six power switches of the three-phase bridge legs further includes: before generating the pulse width modulation signals for the six power switches according to the switching frequency request value and the direct-axis voltage request value,
acquiring over-temperature information of the motor controller 1 and the three-phase motor 2, when it is determined, according to the over-temperature information, that the motor controller 1 or the three-phase motor 2 is in an over-temperature state, reducing the direct-axis voltage request value, and updating the direct-axis voltage request value with a reduced direct-axis voltage request value.

For example, the six power switches of the three-phase bridge legs of the motor controller 1 may be subject to over-temperature to affect the use of the IGBT, such as the service life. Ends of the three-phase stator windings of the three-phase motor 2 may be subject to over-temperature to affect the use of the three-phase motor 2. Whether the motor controller 1 or the three-phase motor 2 is in an over-temperature state is determined through tests. Reducing the direct-axis voltage request value may involve reducing the direct-axis voltage request value according to a proportional coefficient, for example, multiplying the direct-axis voltage request value determined in the previous step by a proportional coefficient (for example, 0.8, 0.9, 0.95), and updating the direct-axis voltage request value with the resulting product. In this way, over-temperature operation of the motor controller 1 or the three-phase motor 2 can be avoided, thereby ensuring the safety of the vehicle and improving the stability of the vehicle.

Optionally, controlling the six power switches of the three-phase bridge legs further includes: before generating the pulse width modulation signals for the six power switches according to the switching frequency request value and the direct-axis voltage request value,
acquiring overcurrent information of the motor controller 1 and the three-phase motor 2, when it is determined, according to the overcurrent information, that the motor controller 1 or the three-phase motor 2 is in an overcurrent state, reducing the direct-axis voltage request value, and updating the direct-axis voltage request value with a reduced direct-axis voltage request value.

For example, overcurrent may occur in the six power switches of the three-phase bridge legs of the motor controller 1 to affect the use of the IGBT, such as the service life, and overcurrent may occur in the three-phase stator windings of the three-phase motor 2 to affect the use of the three-phase motor 2. Whether the motor controller 1 or the three-phase motor 2 is in an overcurrent state is determined through tests, for example, overcurrent of the IGBT may be understood as the current flowing through the IGBT exceeding an allowable current amplitude. Reducing the direct-axis voltage request value may involve reducing the direct-axis voltage request value according to a proportional coefficient, for example, multiplying the direct-axis voltage request value determined in the previous step by a proportional coefficient (for example, 0.8, 0.9, 0.95), and updating the direct-axis voltage request value with the resulting product. In this way, overcurrent operation of the motor controller 1 or the three-phase motor 2 can be avoided, thereby ensuring the safety of the vehicle and improving the stability of the vehicle.

Optionally, controlling the six power switches of the three-phase bridge legs of the motor controller 1 alternately in accordance with the first control, the second control, the third control, and the fourth control further includes: before generating the pulse width modulation signals for the six power switches according to the switching frequency request value and the direct-axis voltage request value, acquiring a Noise, Vibration, and Harshness (NVH) level (in dB) of the vehicle, when the NVH level exceeds a preset value, reducing the direct-axis voltage request value, and updating the direct-axis voltage request value with a reduced direct-axis voltage request value.

Specifically, the direct-axis voltage request value determined in the previous step is multiplied by a proportional coefficient (for example, 0.8, 0.9, 0.95), and the direct-axis voltage request value is updated with the resulting product. This prevents an excessive NVH level of the vehicle from affecting the use of the vehicle.

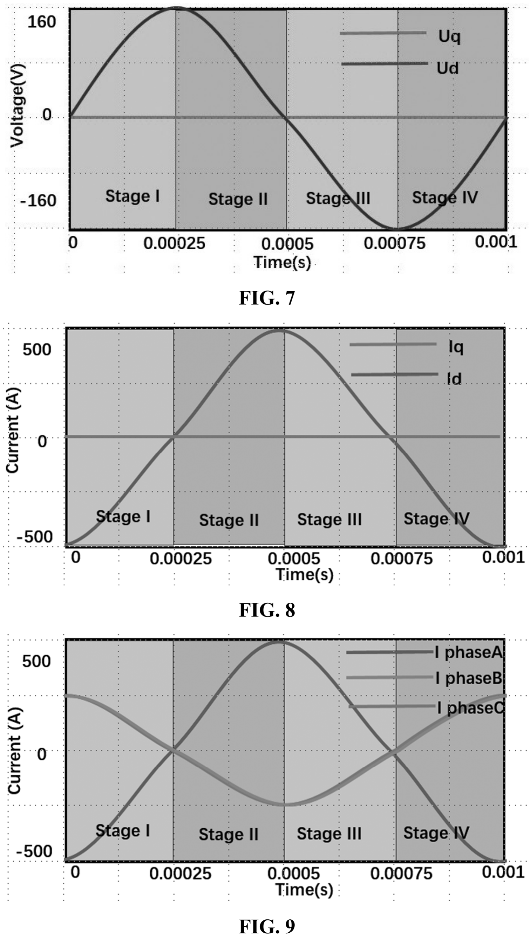

FIG. 7 illustrates sinusoidal control waveforms of a direct-axis voltage and a quadrature-axis voltage over time within a control cycle period according to an embodiment of the present disclosure. FIG. 8 illustrates sinusoidal control waveforms of a direct-axis current and a quadrature-axis current over time within a control cycle period according to an embodiment of the present disclosure. FIG. 9 illustrates waveforms of three-phase winding currents over time within a control cycle period according to an embodiment of the present disclosure. FIG. 10 illustrates a waveform of a bus current over time within a control cycle period according to an embodiment of the present disclosure. A quadrature-axis voltage Uq and a quadrature-axis current Iq are always zero. A direct-axis voltage Ud and a direct-axis current Id are controlled sinusoidally. I phaseA is a current flowing through the phase-A bridge leg and the phase-U winding L1. I phaseB is a current flowing through the phase-B bridge leg and the phase-V winding L2. I phaseC is a current flowing through the phase-C bridge leg and the phase-W winding L3. The waveform of I phaseB coincides with that of I phaseC. I Bus is the bus current. Stage1, Stage2, Stage3, and Stage4 in the figures correspond to a first control stage, a second control stage, a third control stage, and a fourth control stage, respectively.

As shown in the following table, several sets of test data are shown, where Frequency represents the direct-axis current frequency request value, Position represents the position of the rotor of the motor when the pulse heating is started, and Duty represents the duty cycle.

| Frequency (Hz) | Ud amplitude(V) | Position | Duty | I bus(A) | I phaU(A) | I phaV(A) | I phaW(A) |
|---|---|---|---|---|---|---|---|
| 1000 | (-45, 50) | 4.97 | 50% | (-56,50) | (-91,79) | (167,175) | (-92,79) |
| 1000 | (-72, 80) | 4.94 | 50% | (-150,134) | (-153,137) | (-291,306) | (-163,145) |
| 1000 | (-100,110) | 4.95 | 50% | (-256,312) | (-219,212) | (-441,431) | (-226,221) |
| 800 | (-36,40) | 3.88 | 50% | (-32,27) | (-82,84) | (-69,75) | (-166,142) |
| 900 | (-36,40) | 3.97 | 50% | (-40,31) | (-56,97) | (-55,103) | (-166,206) |
| 1000 | (-36,40) | 3.93 | 50% | (-36,28) | (-64,66) | (-64,66) | (-132,121) |
| 1100 | (-36,40) | 4.44 | 50% | (-40,34) | (-2,2) | (-80,148) | (-76,121) |
| 1200 | (-36,40) | 3.90 | 50% | (-24,23) | (-51,52) | (-51,52) | (-101,104) |

Optionally, in the foregoing embodiments, the activation condition includes one or more of: the three-phase motor 2 meeting a first condition for pulse heating, and the power battery 4 meeting a second condition for pulse heating. The first condition and the second condition may be implemented by using related technologies, which will be exemplified later.

Optionally, the first condition includes the three-phase motor 2 being free of a set fault. The set fault includes a fault that the three-phase motor 2 cannot output a torque, and the set fault further includes a fault that the three-phase stator windings of the three-phase motor 2 cannot be charged and discharged. That is, the three-phase motor 2 needs to be in a state available for the pulse heating of the power battery 4, otherwise corresponding controls cannot be realized, making it difficult to achieve the purpose of the pulse heating.

Optionally, the second condition includes one or more of:
the SOC value of the power battery 4 being greater than or equal to a preset SOC value, which can prevent depletion of the power battery 4 caused by discharging at an excessively low SOC value, thus avoiding affecting the service life of the power battery 4;
a minimum temperature of cells of the power battery 4 being less than or equal to a preset minimum temperature, where when the minimum temperature of the cells is relatively high, better performance of the power battery 4 can be achieved without heating of the power battery 4, and the preset minimum temperature can be set to different values according to specific ambient temperatures, such as -5°C or -10°C;
a temperature difference among the cells of the power battery 4 being less than or equal to a preset temperature difference, to avoid overheating of cells with relatively high temperatures due to an excessively high temperature difference among the cells;
an internal resistance of the power battery 4 being greater than or equal to a preset internal resistance, where it is unnecessary to perform the pulse heating on the power battery 4 with an excessively low internal resistance, and even if the pulse heating is performed, it is difficult to realize temperature increase of the power battery 4; and
the power battery 4 being in a state ready for high-voltage power-up and instantaneous charge-discharge, so that damage to the power battery 4 caused by forced high-voltage power-up or instantaneous charge-discharge can be avoided.

When the second condition includes all the foregoing, rationality of the second condition can be improved, and some cases in which the power battery 4 is not suitable for the pulse heating are filtered out, so that reliability of the vehicle is improved when the pulse heating function is enabled.

Further, the activation condition further includes: an operating state of the vehicle meets a third condition for pulse heating.

Specifically, the state of the vehicle should not cause the occupation of the power battery 4 or the three-phase motor 2, in a way that renders the power battery 4 or the three-phase motor 2 unavailable for the pulse heating, which may be implemented by using the related technologies and will be exemplarily described later.

Optionally, the third condition includes one or more of:
a transmission of the vehicle being in P gear;
a speed of the vehicle being less than a preset speed;
a parking system of the vehicle being in a parking state; and
the vehicle being not in an external discharging process (for example, being not in a process of discharging to charge an outdoor electrical equipment), and being not in a charging process (for example, being not in a DC charging or AC charging process).

In this way, the pulse heating is avoided when the rotor of the three-phase motor 2 is in a rotating state, and a problem that a total current flowing through the power battery 4 during the pulse heating process is affected by the vehicle being in the external discharging process or the charging process is avoided, thereby improving reliability of the vehicle.

In the above embodiments, the vehicle control method further includes:
stopping control of the six power switches upon receiving a request to disable the pulse heating function.

For example, a vehicle controller 3 is connected to an antenna module of the vehicle, and the vehicle controller 3 receives the request to enable the pulse heating function from a mobile phone through the antenna module, determines whether the activation condition is met, and when it is determined that the activation condition is met, alternately controls the six power switches of the three-phase bridge legs of the motor controller 1 in accordance with the first control, the second control, the third control, and the fourth control, to perform the pulse heating on the power battery.

The vehicle controller 3 receives the request to disable the pulse heating function from the mobile phone through the antenna module, and stops the control of the six power switches through the motor controller 1. The pulse heating request is thereby completed.

In the above embodiments, the vehicle control method further includes:
stopping the control of the six power switches when the operating state of the vehicle meets a condition for disabling the pulse heating function.

The condition for disabling the pulse heating function may be determined using the related technologies. For example, the condition for disabling the pulse heating function is met when the operating state of the vehicle meets any one of:
the transmission of the vehicle being in D/R gear;
the three-phase motor 2 being of the set fault, where the set fault includes a fault that the three-phase motor 2 cannot output a torque, and the set fault further includes a fault that the three-phase stator windings of the three-phase motor 2 cannot be charged and discharged;
the SOC value of the power battery 4 being less than the preset SOC value;
a maximum temperature of the cells of the power battery 4 being greater than a preset maximum temperature;
the temperature difference among the cells of the power battery 4 being greater than the preset temperature difference;
the internal resistance of the power battery 4 being less than the preset internal resistance; or
the power battery 4 being not in the state ready for high-voltage power-up or instantaneous charge-discharge.

As shown in FIG. 2, a case in which the control unit includes the vehicle controller 3 connected to the antenna module of the vehicle will be described below as an example, to exemplarily describe interaction between various controllers during a process of performing the vehicle control method according to the present disclosure.

A request to enable a pulse heating function is triggered. For example, the request to enable the pulse heating function is issued via a remote client such as a mobile phone. In other embodiments, the request to enable the pulse heating function is triggered through human-computer interaction such as a multimedia interaction system.

The request to enable the pulse heating function is received. For example, the vehicle controller 3 receives the request to enable the pulse heating function from the mobile phone through the antenna module. In other embodiments, the request to enable the pulse heating function is received through the multimedia interaction system.

It is determined whether an activation condition is met. For example, the vehicle controller 3 controls the motor control module 11 to determine whether the three-phase motor 2 meets a first condition for pulse heating. For example, the vehicle controller 3 controls the battery controller to determine whether the power battery 4 meets a second condition for pulse heating. For example, the vehicle controller 3 controls the battery controller to determine whether an operating state of the vehicle meets a third condition for pulse heating.

The vehicle is controlled to perform a high-voltage power-up step when the activation condition is met. Specifically, when the vehicle controller 3 receives information that the three-phase motor 2 meets the first condition from the motor control module, receives information that the power battery 4 meets the second condition from the battery controller, and determines that the operating state of the vehicle meets the third condition, the vehicle controller 3 controls the vehicle to perform the high-voltage power-up step, so that a main relay is closed, and a DC-DC converter is activated, thereby allowing power supply to high-voltage accessories. When the activation condition is not met, feedback information indicating that the pulse self-heating function request has failed can be sent to the remote client through the antenna module (or the multimedia interaction system), and the remote client can display the feedback information accordingly.

After the high-voltage power-up step is completed, the motor controller 1 is controlled to perform the pulse heating. For example, the vehicle controller 3 sends a command for performing the pulse heating function to the motor control module 11, and the motor control module 11 alternately controls the six power switches of the three-phase bridge legs of the motor controller 1 in accordance with the first control, the second control, the third control, and the fourth control, to perform the pulse heating. When receiving state feedback information that the motor controller 1 enters a pulse heating mode, the vehicle controller 3 may transmit feedback information that the motor controller 1 has entered the pulse heating mode to the remote client through the antenna module (or the multimedia interaction system), and the remote client may display the feedback information accordingly.

It is determined whether a request to disable the pulse heating function is received, and it is determined whether the operating state of the vehicle meets a condition for disabling the pulse heating function; and
upon the request to disable the pulse heating function is received or it is determined that the operating state of the vehicle meets the condition for disabling the pulse heating function, stopping alternate control of the six power switches of the three-phase bridge legs of the motor controller 1 in accordance with the first control, the second control, the third control, and the fourth control, and stopping the pulse heating.

The vehicle is controlled to perform a high-voltage power-down step. For example, the DC-DC converter is deactivated to stop the power supply to the high-voltage accessories, and then the main relay is opened.

As shown in FIG. 3, another embodiment of the present disclosure provides a vehicle, including a motor controller 1, a battery controller, and a control unit. The motor controller 1 includes a motor control module 11 and three-phase bridge legs. Upper ends of the three-phase bridge legs are connected to a positive terminal of a power battery 4. Lower ends of the three-phase bridge legs are connected to a negative terminal of the power battery 4. Midpoints of the three-phase bridge legs are respectively connected to three-phase stator windings of a three-phase motor 2. Control terminals of six power switches of the three-phase bridge legs are connected to the motor control module 11. The control unit is respectively connected to the motor controller 1 and the battery controller. The control unit is configured to implement the vehicle control method according to the foregoing embodiments.

Optionally, the control unit includes a vehicle controller 3 of the vehicle.

The vehicle controller 3 is connected to a multimedia interaction system of the vehicle and receives the request to enable the pulse heating function through the multimedia interaction system, and/or the vehicle controller 3 is connected to an antenna module of the vehicle and receives the request to enable the pulse heating function from a remote client through the antenna module.

Here, the content of the vehicle has been described in detail above and will not be repeated herein.

Although the present disclosure is disclosed as above, the protection scope of the present disclosure is not limited thereto. Those skilled in the art can make various changes and modifications without departing from the spirit and scope of the present disclosure, and these changes and modifications all fall within the protection scope of the present disclosure.

## Claims

1. A vehicle control method, comprising:
receiving a request to enable a pulse heating function;
in response to an activation condition being met, controlling a rotor of a three-phase motor (2) to move until an axial direction of a direct-axis is the same as an axial direction of a stator winding corresponding to a set phase bridge leg among three-phase bridge legs of a motor controller (1); and
controlling six power switches of the three-phase bridge legs to alternately perform an energy storage process on three-phase stator windings corresponding to the three-phase bridge legs by a power battery (4) and a charging process on the power battery (4) by the three-phase stator windings using stored energy, wherein the three-phase bridge legs include a first target bridge leg and a second target bridge leg, during the energy storage process, both an upper bridge leg switch of one of the first target bridge leg and the second target bridge leg and a lower bridge leg switch of the other of the first target bridge leg and the second target bridge leg are controlled to be turned on, and other power switches are controlled to be turned off, and during the charging process, all the six power switches are controlled to be turned off, wherein one of the first target bridge leg and the second target bridge leg with fewer bridge legs is the set phase bridge leg.

2. The vehicle control method according to claim 1, wherein controlling the six power switches of the three-phase bridge legs comprises:
controlling the six power switches alternately in accordance with a first control, a second control, a third control, and a fourth control; wherein during the first control, an upper bridge leg switch of the first target bridge leg and a lower bridge leg switch of the second target bridge leg are controlled to be turned on, and other power switches are controlled to be turned off; during the third control, a lower bridge leg switch of the first target bridge leg and an upper bridge leg switch of the second target bridge leg are controlled to be turned on, and other power switches are controlled to be turned off; and during the second control and the fourth control, all the six power switches are controlled to be turned off.

3. The vehicle control method according to claim 1, wherein controlling the six power switches of the three-phase bridge legs comprises:
acquiring a current internal resistance of the power battery (4), and searching for a switching frequency request value and a direct-axis voltage request value corresponding to the current internal resistance in a first preset correspondence according to the current internal resistance;
generating pulse width modulation signals for the six power switches according to the switching frequency request value and the direct-axis voltage request value; and
controlling switching of the six power switches according to the pulse width modulation signals.

4. The vehicle control method according to claim 3, wherein controlling the six power switches of the three-phase bridge legs further comprises: before generating the pulse width modulation signals for the six power switches according to the switching frequency request value and the direct-axis voltage request value,
acquiring a heating level request value and an SOC value of the power battery (4), and searching for a switching frequency adjustment coefficient and a direct-axis voltage adjustment coefficient corresponding to the heating level request value and the SOC value in a second preset correspondence according to the heating level request value and the SOC value; and
updating the switching frequency request value according to the switching frequency adjustment coefficient and the switching frequency request value, and updating the direct-axis voltage request value according to the direct-axis voltage adjustment coefficient and the direct-axis voltage request value.

5. The vehicle control method according to claim 3, wherein controlling the six power switches of the three-phase bridge legs further comprises: before generating the pulse width modulation signals for the six power switches according to the switching frequency request value and the direct-axis voltage request value,
acquiring over-temperature information of the motor controller (1) and the three-phase motor (2), in response to determining, according to the over-temperature information, that the motor controller (1) or the three-phase motor (2) is in an over-temperature state, reducing the direct-axis voltage request value, and updating the direct-axis voltage request value with a reduced direct-axis voltage request value; and/or
acquiring overcurrent information of the motor controller (1) and the three-phase motor (2), in response to determining, according to the overcurrent information, that the motor controller (1) or the three-phase motor (2) is in an overcurrent state, reducing the direct-axis voltage request value, and updating the direct-axis voltage request value with a reduced direct-axis voltage request value; and/or
acquiring an NVH level of a vehicle, in response to the NVH level exceeding a preset value, reducing the direct-axis voltage request value, and updating the direct-axis voltage request value with a reduced direct-axis voltage request value.

6. The vehicle control method according to claim 1, wherein the activation condition comprises one or more of:
the three-phase motor (2) meeting a first condition for pulse heating, and
the power battery (4) meeting a second condition for pulse heating;
wherein the first condition comprises the three-phase motor (2) being free of a set fault, the set fault comprises a fault that the three-phase motor (2) cannot output a torque, and the set fault further comprises a fault that the three-phase stator windings of the three-phase motor (2) cannot be charged or discharged; and
the second condition comprises one or more of:
the SOC value of the power battery (4) being greater than or equal to a preset SOC value;
a minimum temperature of cells of the power battery (4) being less than or equal to a preset minimum temperature;
a temperature difference among the cells of the power battery (4) being less than or equal to a preset temperature difference;
an internal resistance of the power battery (4) being greater than or equal to a preset internal resistance; and
the power battery (4) being in a state ready for high-voltage power-up and instantaneous charge-discharge.

7. The vehicle control method according to claim 6, wherein the activation condition further comprises: an operating state of a vehicle meets a third condition for pulse heating; and the third condition comprises one or more of:
a transmission of the vehicle being in P gear;
a speed of the vehicle being less than a preset speed;
a parking system of the vehicle being in a parking state; and
the vehicle being not in an external discharging process or a charging process.

8. The vehicle control method according to claim 6, further comprising:
stopping control of the six power switches in response to receiving a request to disable the pulse heating function or an operating state of a vehicle meeting a condition for disabling the pulse heating function.

9. A vehicle, comprising a motor controller (1), a battery controller, and a control unit, wherein the motor controller (1) comprises a motor control module (11) and three-phase bridge legs, upper ends of the three-phase bridge legs are connected to a positive terminal of a power battery (4), lower ends of the three-phase bridge legs are connected to a negative terminal of the power battery (4), midpoints of the three-phase bridge legs are respectively connected to three-phase stator windings of a three-phase motor (2), control terminals of six power switches of the three-phase bridge legs are connected to the motor control module (11), the control unit is respectively connected to the motor controller (1) and the battery controller, and the control unit is configured to implement the vehicle control method according to any one of claims 1 to 8.

10. The vehicle according to claim 9, wherein the control unit comprises a vehicle controller (3) of the vehicle; the vehicle controller (3) is connected to a multimedia interaction system of the vehicle and receives the request to enable the pulse heating function through the multimedia interaction system, and/or the vehicle controller (3) is connected to an antenna module of the vehicle and receives the request to enable the pulse heating function from a remote client through the antenna module.
